# EUROPÄISCHE PATENTSCHRIFT

(11) **EP 4 291 355 B1**
(45) Veröffentlichungstag und Bekanntmachung des Hinweises auf die Patenterteilung: **02.07.2025**
(21) Anmeldenummer: 22702703.4
(22) Anmeldetag: 28.01.2022
(51) Int. Cl.: B25B 7/12, B25B 27/14, H01R 43/042, B25F 5/00

(54) **SICHERHEITSVENTIL FÜR EIN PNEUMATISCH BETÄTIGBARES WERKZEUG**
SAFETY VALVE FOR A PNEUMATICALLY ACTUATABLE TOOL
SOUPAPE DE SÉCURITÉ POUR UN OUTIL À ACTIONNEMENT PNEUMATIQUE

(30) Priorität: 09.02.2021 DE 102021103015
(43) Veröffentlichungstag der Anmeldung: 20.12.2023
(73) Patentinhaber: Oetiker Schweiz AG, 8810 Horgen (CH)
(72) Erfinder: WHITE, Brett Richard, New York 14033 (US); SCHUSTER, Gabriel, 8853 Lachen (CH); STEINER, Peter, 8849 Alpthal (CH); MOSER, Pascal, 8915 Hausen am Albis (CH)
(74) Vertreter: Strehl & Partner mbB
(86) Internationale Anmeldenummer: PCT/EP2022/052043
(87) Internationale Veröffentlichungsnummer: WO 2022/171459

(56) Entgegenhaltungen:
- DE-A1- 1 503 020
- DE-A1- 19 519 543
- US-A1- 2004 031 839

## Beschreibung

Die Erfindung betrifft ein pneumatisch betätigbares Werkzeug nach dem Oberbegriff des Anspruchs 1.

Aus der EP 1163979 A1 sind eine Vorrichtung zum pneumatischen Betätigen eines Werkzeugs sowie eine pneumatische Zange bekannt.

Pneumatische Zangen zum Verpressen und Festklemmen von Klemmringen, Bolzen, Kabelschuhen, Briden etc. sind bekannt. Insbesondere werden pneumatische Zangen in der Automobilindustrie verwendet, wo diese Zangen für das Festklemmen von Klemmringen bei der Montage von Schläuchen, Faltbälgen etc. an Stutzen, Gelenkwellen und dergleichen genutzt werden.

Die DE 15 03 020 A1 offenbart ein pneumatisches Werkzeug nach dem Oberbegriff des Anspruchs 1. Aus DE 37 42 782 A ist eine Druckmittelzange für Federbandschellen mit einem ventilgesteuerten Druckmittelanschluss und einem keilförmigen Vorschubglied bekannt. Weitere derartige Zangen sind aus den Dokumenten DE 89 00 250 U, DE 195 19 543 A, DE 295 09 976 U, US 2004/031839 und DE 91 11 366 U bekannt.

In den aus dem Stand der Technik bekannten Werkzeugen wird ein Druckzylinder durch Betätigen einer Auslöseeinheit mit Druck beaufschlagt. In einigen Fällen umfasst das Werkzeug oder eine Druckversorgung eine elektronische Regelungseinheit, die aufgrund einer Fehlfunktion unerwartet Druck auf die Auslöseeinheit geben und das Werkzeug schließen könnte. Die Werkzeuge nach dem Stand der Technik haben keinerlei mechanische SicherheitsEinrichtungen, die die Energiezufuhr (Druckluft) unterbrechen könnten. Sollte unerwartet Druck auf die Auslöseeinheit gegeben werden, beispielsweise infolge eines Softwarefehlers, schließt die Zange, bzw. deren Backen. Dies kann zu gefährlichen Situationen führen. Deshalb stellen unterschiedliche Normen sicher, dass diese unerwartete Schließung vermieden wird. Da eine Firmware mit einfachem Aufbau gemäß gängigen Normen nie als vollständig sicher gilt, muss die Auslöseeinheit redundant aufgebaut werden, insbesondere wird dies mit einer elektronisch redundant aufgebauten Regelungseinheit erreicht.

Der Erfindung liegt insbesondere die Aufgabe zugrunde, eine Alternative zum elektronisch redundanten Aufbau der Auslöseeinheit bereitzustellen und effektiv zu verhindern, dass das Werkzeug bei unerwartetem Druckaufbau Schäden verursachen kann.

Die Aufgabe wird gelöst durch ein pneumatisches Werkzeug mit den Merkmalen des Anspruchs 1. Vorteilhafte Ausgestaltungen der Erfindung ergeben sich aus den Unteransprüchen.

Die Erfindung geht aus von einem pneumatischen Werkzeug, insbesondere einem elektronisch geregelten, pneumatischen Werkzeug, bei dem der aufgebrachte Druck elektronisch überwacht wird. Das Werkzeug umfasst einen Handgriff, einen am Handgriff angeordneten Sicherheitsschalthebel zum Betätigen eines Ventils und einen Druckmittelanschluss, wobei das Ventil einen zwischen einer Grundstellung und wenigstens einer weiteren Stellung bewegbaren Ventilkörper umfasst, wobei in der Grundstellung eine Verbindung zwischen dem Druckmittelanschluss und einem Druckzylinder des Werkzeugs unterbrochen ist und in der weiteren Stellung die Verbindung zwischen dem Druckmittelanschluss und dem Druckzylinder des Werkzeugs hergestellt ist.

Bei dem Werkzeug kann es sich insbesondere um eine Zange handeln, es ist jedoch auch eine Nutzung der Erfindung in anderen Werkzeugen denkbar.

Es wird vorgeschlagen, dass der Druckzylinder mit dem Verschieben des Ventilkörpers in die Grundstellung entlüftet wird und ein am Druckmittelanschluss anliegender Druck den Ventilkörper bei losgelassenem Sicherheitsschalthebel in die Grundstellung verschiebt. Das Ventil wird durch die Wirkung des Drucks ohne manuellen Eingriff sicher in die Grundstellung zurückgestellt, wenn der Benutzer den Sicherheitsschalthebel loslässt, beispielswiese weil er sich verletzt hat. Gleichzeitig wird der Druckzylinder entlüftet, so dass ggf. eingeklemmte Elemente wie Finger oder Kleidung sicher entfernt werden können.

Gemäß der Erfindung ist der Ventilkörper als eine auf einem Druckversorgungs-Anschlussstutzen verschiebbare Manschette ausgestaltet, deren Innenfläche mit einer Außenfläche des Druckversorgungs-Anschlussstutzens eine Druckkammer einschließt, wobei die beiden axialen Stirnseiten der Druckkammer von Innenflächen der Manschette gebildet sind und unterschiedliche Flächeninhalte bzw. Druck-Angriffsflächen haben. Dadurch kann die gewünschte Funktionalität bei robuster und kompakter Bauweise erreicht werden.

Die unterschiedlichen Druck-Angriffsflächen lassen sich besonders einfach realisieren, wenn ein Außendurchmesser des Druckversorgungs-Anschlussstutzens an einer zum Druckzylinder hin geöffneten Seite größer ist als ein Außendurchmesser des Druckversorgungs-Anschlussstutzens an einer zum Druckmittelanschluss hin geöffneten Seite. Dabei entsprechen bei einer axial verschiebbaren Manschette die axialen Projektionen der inneren Stirnflächen der Manschette den Druck-Angriffsflächen.

In einer bevorzugten Ausgestaltung der Erfindung kann insbesondere der Druckversorgungs-Anschlussstutzen eine erste, zum Druckmittelanschluss hin geöffnete Innenbohrung und eine zweite, zum Druckzylinder hin geöffnete Innenbohrung sowie erste und zweite, insbesondere radiale Druckdurchlass-Bohrungen umfassen, wobei letztere jeweils die erste bzw. zweite Innenbohrung mit der Außenfläche des Druckversorgungs-Anschlussstutzens verbinden. In der Grundstellung münden die ersten Durchlass-Bohrungen in die Druckkammer und die zweiten Durchlass-Bohrungen sind zum Entlüften freigegeben. Dadurch wird in der Grundstellung der Druckzylinder entlüftet. In der weiteren Stellung münden die ersten und die zweiten Durchlass-Bohrungen in die Druckkammer, so dass der Druck aus dem Druckmittelanschluss durch die ersten Druckdurchlass-Bohrungen in die Druckkammer, von dort durch die zweiten Druckdurchlass-Bohrungen in die zweite Innenbohrung und damit zum Druckzylinder weitergeleitet wird.

In einer weiteren Ausgestaltung umfasst das Werkzeug ferner eine Feder, die eine Rückstellkraft erzeugt, welche den Ventilkörper bei losgelassenem Sicherheitsschalthebel in die Grundstellung verschiebt. Die Feder kann den Druck bei der Rückstellung des Ventilkörpers unterstützen, so dass auch bei geringen Drücken (oder sogar ohne Druck im System) das Ventil in die sichere, geschlossene Grundstellung überführt wird. Die Feder kann dabei so ausgelegt sein, dass sicher immer eine Reibkraft des Ventilkörpers überwunden werden kann, so dass eine weitere Redundanz des Sicherheitsventils erzeugt wird.

Die Erfindung schlägt mit anderen Worten vor, direkt in der Auslöseeinheit des erfindungsgemäßen Werkzeugs ein 3/2 Wege-Sicherheitsventil vorzusehen und so zu verhindern, dass das Werkzeug bzw. die Zange sich bei unerwartetem Druckaufbau schließt und so Personen verletzen kann. Das Sicherheitsventil gibt nur dann den Druckdurchgang frei, wenn dies auch notwendig ist.

Ferner wird vorgeschlagen, dass das Sicherheitsventil rein mechanisch bedienbar ist. Dies hat verschiedene Vorteile, insbesondere, dass keine zusätzliche Elektronik nötig ist, der Bauraum, der sehr eng ist, nicht überbelastet wird und die Griffkraft, die es ohnehin braucht, um die Auslöseeinheit festzuhalten, genutzt werden kann.

Die Erfindung gewährleistet, dass beim Nichtdrücken des Sicherheitsschalthebels die Druckluft immer unterbrochen ist. Dies entspricht der sicheren Grundstellung. Gleichzeitig wird in der Grundstellung der Druckzylinder des Werkzeugs sicher entlüftet. Wird nun der der Sicherheitsschalthebel gedrückt, wird das das Sicherheitsventil so gestellt, dass die Entlüftung geschlossen wird und der Druck ungehindert in die Zange gelangen kann. Dabei soll das Sicherheitsventil ohne Betätigung in die sichere Druckstellung zurückgestellt werden, damit das Werkzeug automatisch gesperrt und entlüftet wird.

Weitere Merkmale und Vorteile ergeben sich aus der folgenden Figurenbeschreibung. Die gesamte Beschreibung und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 ein als Zange ausgebildetes pneumatisches Werkzeug nach einem ersten Ausführungsbeispiel der Erfindung;
Fig. 2 ein Ventil des Werkzeugs aus Fig. 1 in einer Grundstellung;
Fig. 3 das Ventil aus Fig. 2 in einer weiteren Stellung;
Fig. 4a und 4b das Ventil aus den Figuren 2 und 3 in einem größeren Kontext;
Fig. 5a und 5b einen ersten Längsschnitt eines Handgriffs eines pneumatischen Werkzeugs gemäß der Erfindung; und
Fig. 6a und 6b einen zweiten Längsschnitt eines Handgriffs eines pneumatischen Werkzeugs gemäß der Erfindung.

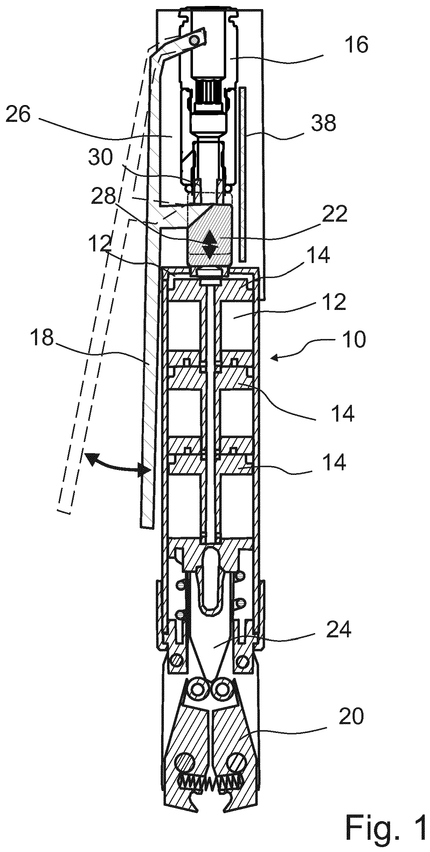

Figur 1 zeigt ein als Zange ausgebildetes pneumatisches Werkzeug 10 nach einem ersten Ausführungsbeispiel der Erfindung.

Die Zange ist für das Verbauen von Rohrschellen, Schlauchbriden, Klemmringen etc. ausgelegt. In einem Druckzylinder 12 sind mehrere in Serie bzw. in Reihe hintereinander angeordnete Kolben 14 angeordnet.

Am hinteren Ende der handbetätigbaren pneumatischen Zange ist ein Druckmittelanschluss 16 vorgesehen, mittels dessen die Zange über eine Druckleitung (nicht dargestellt) an ein Druckmittel, wie beispielsweise an Pressluft, angeschlossen werden kann, wobei die Druckmittelzufuhr mittels eines Sicherheitsschalthebels 18, der ein Ventil 22 betätigt, geöffnet bzw. das Werkzeug 10 entlüftet werden kann.

Die einzelnen Kolben 14 weisen einen Durchgang durch die Kolbenstangen auf, um Druckmittel hindurchtreten zu lassen. Im Bereich des frontseitigen Endes der Kolbenstangen sind radial nach außen gerichtet Austrittsöffnungen vorgesehen. Durch die Austrittöffnungen kann Druckluft austreten. Durch die Druckluft wird der nächstfolgende Kolben 14 vorwärtsgetrieben. Der Durchtritt der Druckluft durch den Durchgang der nächstfolgenden Kolbenstange wiederholt sich in analoger Art und Weise.

In Richtung des Zangenwerkzeugs 20 am den vordersten Kolben 14 folgt der sogenannte Keilkolben 24, an dessen Frontseite ein keilförmiges Vorschubglied angeordnet ist, zum Betätigen des Zangenkopfes bzw. Zangenwerkzeugs 20. Durch den mittels des Druckmittels, vorwärts getriebenen Keilkolben 24 werden die beiden beispielsweise auf Bolzen gelagerten Zangenbacken des Zangenwerkzeugs 20 im hinteren Bereich auseinandergetrieben, indem sich die Keilfläche zwischen zwei Rollen schiebt. Gleichzeitig werden die beiden Zangenbacken des Zangenwerkzeugs 20 frontseitig in Schließrichtung zusammengetrieben, um beispielsweise eine Schlauchbride festzuklemmen bzw. Ohrklemmen oder dergleichen durch Betätigen des Zangenwerkzeugs 20 zu verpressen.

Ferner umfasst das pneumatische Werkzeug einen Handgriff 26, an welchem der Sicherheitsschalthebel 18 zum Betätigen des Ventils 22 angeordnet ist. Im Handgriff 26 ist ferner eine Platine mit einer elektronischen Schalteinheit 38 vorgesehen, die über die Signalleitung in der Druckleitung ein Druckanforderungssignal an die Druckquelle ausgibt.

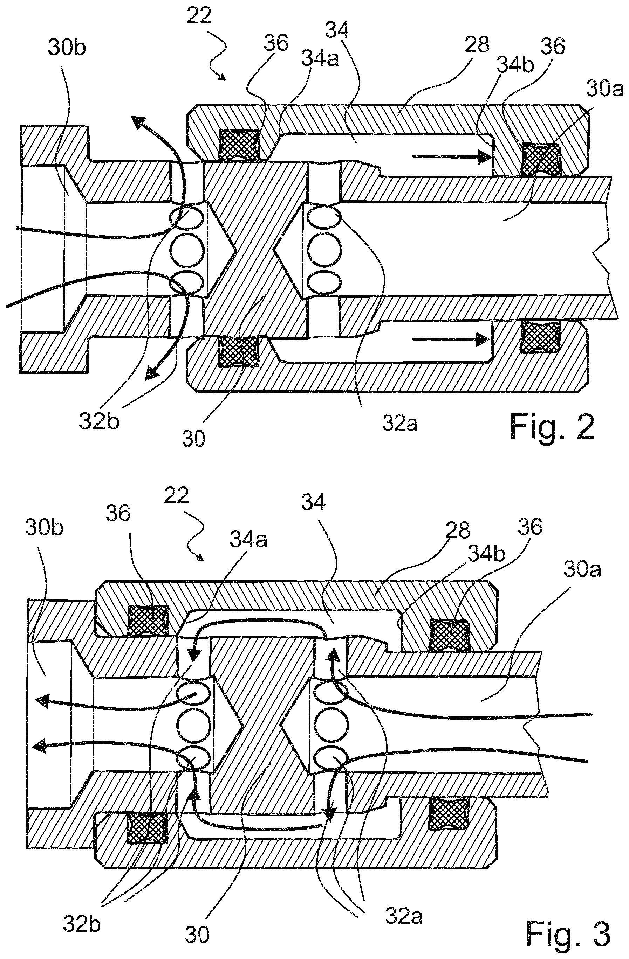

Fig. 2 zeigt das Ventil 22 in der Grundstellung, in welcher eine Verbindung zwischen dem Druckmittelanschluss 16 und einem Druckzylinder 12 des Werkzeugs 10 unterbrochen ist. Das Ventil 22 umfasst einen als Manschette ausgebildeten Ventilkörper 28, der zwischen der Grundstellung und wenigstens einer weiteren Stellung (Fig. 3) bewegbar auf einem Druckversorgungs-Anschlussstutzen 30 angeordnet ist.

Der Druckversorgungs-Anschlussstutzen 30 hat eine erste, zum Druckmittelanschluss 16 hin geöffnete Innenbohrung 30a und eine zweite, zum Druckzylinder 12 hin geöffnete Innenbohrung 30b sowie erste und zweite radiale Druckdurchlass-Bohrungen 32a, 32b. Die Druckdurchlass-Bohrungen 32a, 32b verbinden jeweils die erste oder zweite Innenbohrung 30a, 30b mit der Außenfläche des Druckversorgungs-Anschlussstutzens 30. In der in Fig. 2 dargestellten Grundstellung münden die ersten Druckdurchlass-Bohrungen 32a in eine Druckkammer 34 des Ventils 22 und die zweiten Druckdurchlass-Bohrungen 32b sind zum Entlüften freigegeben.

Mit dem Verschieben des Ventilkörpers 28 in die Grundstellung kann der Druckzylinder 12 daher über die zweiten Druckdurchlass-Bohrungen 32b entlüftet werden.

Die Innenfläche des auf dem Druckversorgungs-Anschlussstutzen 30 verschiebbaren, als Manschette ausgestalteten Ventilkörpers 28 schließt mit einer Außenfläche des Druckversorgungs-Anschlussstutzens 30 die Druckkammer 34 ein, wobei die beiden axialen Stirnseiten 34a, 34b der Druckkammer 34 von Innenflächen der Manschette gebildet sind und unterschiedliche Flächeninhalte haben. Durch die unterschiedlichen Flächeninhalte ergeben sich unterschiedliche, in entgegengesetzte Richtungen wirkende Drucckräfte und eine resultierende Kraft, die in der Richtung der Stirnseite 34b mit der größeren Fläche wirkt, also in Fig. 2 und 3 nach rechts, und den Ventilkörper 28 in Richtung der Grundstellung verschiebt. Ein am Druckmittelanschluss 16 anliegender Druck verschiebt daher den Ventilkörper 28 bei losgelassenem Sicherheitsschalthebel 18 in der Orientierung gemäß Fig. 2 und 3 nach rechts in die Grundstellung, ohne dass vom Benutzer oder anderweitig eine weitere Kraft auf den Ventilkörper 28 ausgeübt werden muss.

An den inneren Rändern der Stirnseiten 30a,30b des Ventilkörpers 28, die den Außenflächen des Druckversorgungs-Anschlussstutzens 30 zugewandt sind, sind Dichtringe 36 vorgesehen, die die Drucckammer 34 abdichten. Insbesondere die Verwendung von Lippendichtungen mit einem X-Profil, also von X-Ringen oder Quad-Ringen, hat den Vorteil einer geringen Haftreibung und dynamischen Reibung.

Das Ventil 22 wird demnach durch die Wirkung des Drucks ohne manuellen Eingriff sicher in die Grundstellung (Fig. 2) gestellt, wenn der Benutzer den Sicherheitsschalthebel 18 loslässt, beispielswiese weil er sich verletzt hat. Gleichzeitig wird der Druckzylinder 12 entlüftet, so dass ggf. eingeklemmte Elemente wie Finger, Kleidung oder dergleichen problemlos sicher entfernt werden können.

Die unterschiedlichen Flächen werden durch unterschiedliche Außendurchmesser des Druckversorgungs-Anschlussstutzens 30 erreicht, und zwar dadurch, dass der Außendurchmesser des Druckversorgungs-Anschlussstutzens 30 an einer zum Druckzylinder 12 hin geöffneten Seite größer ist als ein Außendurchmesser des Druckversorgungs-Anschlussstutzens 30 an einer zum Druckmittelanschluss 16 hin geöffneten Seite. Die Bereiche mit unterschiedlichen Außendurchmessern sind durch eine Stufe getrennt, die von der Manschette des Ventilkörpers 28 überbrückt wird.

Fig. 3 zeigt das Ventil 22 in der weiteren Stellung, in welcher die Verbindung zwischen dem Druckmittelanschluss 16 und dem Druckzylinder 12 des Werkzeugs hergestellt ist. In der weiteren Stellung münden sowohl die ersten als auch die zweiten Durchlass-Bohrungen 32a, 32b in die Druckkammer 34. Damit ist eine Druckverbindung vom Druckmittelanschluss 16 über die Druckkammer 34 zum Druckzylinder 12 hergestellt.

Durch die Betätigung des Sicherheitsschalthebels 18 wird das Ventil 22 betätigt und damit geöffnet bzw. in die Konfiguration der Fig. 3 bewegt, wobei der als Manschette ausgestaltete Ventilkörper 28 in der Ansicht gemäß Fig. 3 nach links geschoben wird. Durch Halten des Sicherheitsschalthebels 18 wird das Ventil 22 offengehalten (Fig. 3). Wird nun der Sicherheitsschalthebel 18 losgelassen, z.B. infolge eines eingeklemmten Fingers, schließt sich das Ventil 22 aufgrund des fortwirkenden Drucks automatisch (Fig. 2).

Die zum Schließen genutzte resultierende Kraft ergibt sich, weil die druckbeaufschlagten Flächen nicht identisch sind. In die Richtung der Grundstellung ist die Ringfläche größer, was zu einer resultierenden Kraft der Selbstschließung führt. Damit wird sichergestellt, dass sich das Ventil 22 unter Druck immer schließt.

Bei anliegendem Druck ist das Ventil 22 daher nicht wie reguläre 3/2 Ventile bistabil sondern monostabil.

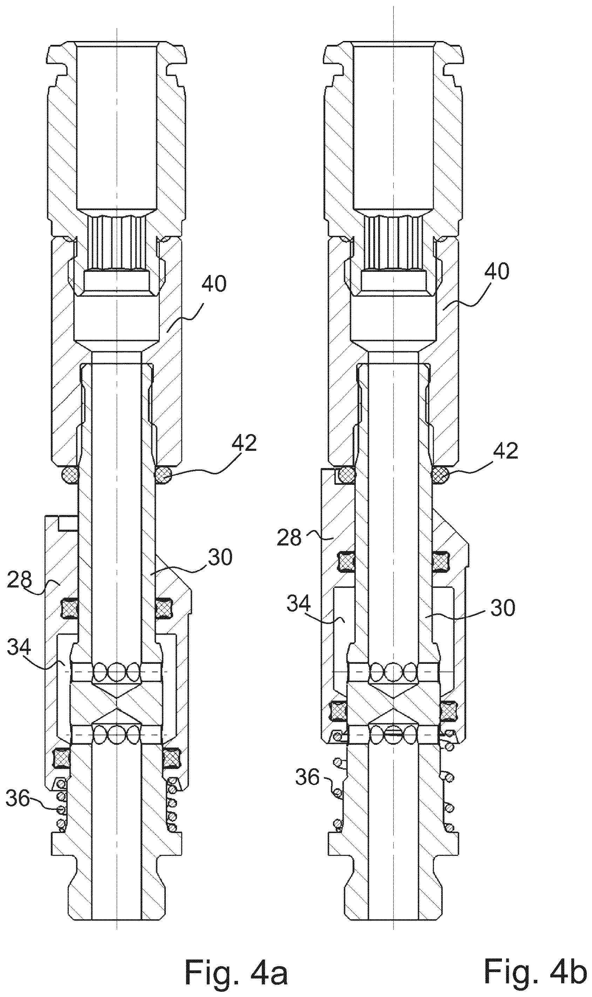

Fig. 4a und 4b zeigen das Ventil aus den Figuren 2 und 3 in einem größeren Kontext. In dem Ausführungsbeispiel aus Fig. 4a und 4b ist eine Feder 36 vorgesehen, die eine Rückstellkraft erzeugt, welche den Ventilkörper 28 bei losgelassenem Sicherheitsschalthebel 18 in die Grundstellung verschiebt und in die gleiche Richtung wirkt wie die aus den Druckkräften resultierende Kraft. Die Feder 36 unterstützt demnach bei der Rückstellung des Ventilkörpers 28 die Druckkräfte derart, dass auch bei geringen Drücken oder ganz ohne Druck das Ventil 22 in die sichere, geschlossene Grundstellung überführt wird. Es sind aber auch Ausführungsbeispiele ohne die zusätzliche Feder 36 denkbar.

Der Druckversorgungs-Anschlussstutzen 30 ist in ein Adapterstück 40 zum Anschluss eines Druckversorgungs-Schlauchs (mit integrierter Signalleitung) eingesetzt. Ein axial vorderes Ende des Adapterstücks 40 bildet einen Anschlag für den Ventilkörper 28. Dort ist ein O-Ring 42 zum Dämpfen des Anschlags vorgesehen.

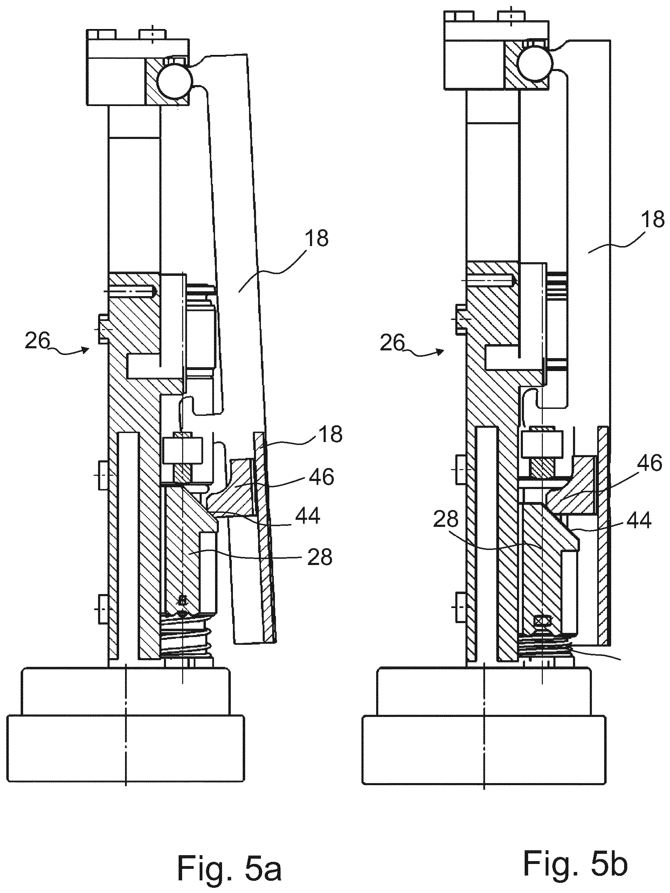

Fig. 5a und 5b zeigen einen ersten Längs-Teilschnitt des Handgriffs 26 des pneumatischen Werkzeugs gemäß der Erfindung. Der Ventilkörper 28 ist mit einer Schräge 44 ausgestattet, auf der ein mit dem Sicherheitsschalthebel 18 verbundener Vorsprung 46 mit einer korrespondierenden Schräge gleitet. Der Sicherheitsschalthebel 18 ist über ein am hinteren Ende des Handgriffs 26 angeordnetes Gelenk schwenkbar mit dem Handgriff 26 verbunden.

Beim Greifen des Handgriffs 26 mit einer Hand schwenkt der Benutzer den Sicherheitsschalthebel 18 aus einer geschlossenen Stellung (Fig. 5a) nach innen in eine offene Stellung (Fig. 5b) und der Ventilkörper 28 wird über den Vorsprung 46 und die Schräge 44 in die offene Stellung geschoben.

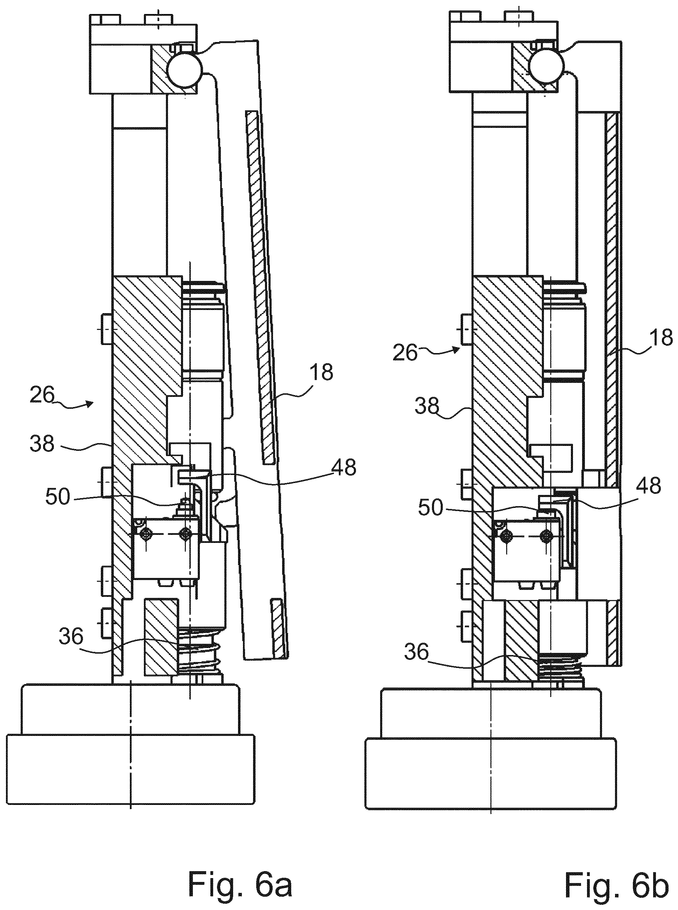

Fig. 6a und 6b ist ein zweiter Längs-Teilschnitt des Handgriffs 26 des pneumatischen Werkzeugs gemäß der Erfindung. Ein am Ventilkörper 28 befestigter, winkelförmiger Schaltfortsatz 48 betätigt einen im Handgriff 26 angeordneten Sicherheitsschalter 50, der geschlossen sein muss, damit die im Handgriff 26 angeordnete elektronische Schalteinheit 38 über die Signalleitung in der Druckleitung ein Druckanforderungssignal an die Druckquelle ausgibt. Beim Verschieben des Schaltkörpers 28 in die offene Stellung wird über den Schaltfortsatz 48 der Sicherheitsschalter 50 betätigt und ein Kontakt im Sicherheitsschalter geschlossen, womit eine in die Logik der elektronischen Schalteinheit 38 implementierte notwendige Bedingung zum Auslösen des Druckanforderungssignals erfüllt ist. Der Schaltfortsatz 48 stellt daher eine mechanische Verbindung zwischen dem Ventilkörper 28 und dem elektromechanischen Sicherheitsschalter 50 her, die der elektronischen Schalteinheit 38 eine Überwachung des Ventils 22 erlaubt.

### Bezugszeichenliste

- 10: Werkzeug
- 12: Druckzylinder
- 14: Kolben
- 16: Druckmittelanschluss
- 18: Sicherheitsschalthebel
- 20: Zangenwerkzeug
- 22: Ventil
- 24: Keilkolben
- 26: Handgriff
- 28: Ventilkörper
- 30: Anschlussstutzen
- 32a, 32b: Druckdurchlass-Bohrungen
- 34: Druckkammer
- 36: Feder
- 38: Schalteinheit
- 40: Adapterstück
- 42: O-Ring
- 44: Schräge
- 46: Vorsprung
- 48: Schaltfortsatz
- 50: Sicherheitsschalter

## Patentansprüche

1. Pneumatisches Werkzeug mit einem Handgriff (26), einem Ventil (22), einen am Handgriff (26) angeordneten Sicherheitsschalthebel (18) zum Betätigen des Ventils (22) und einem Druckmittelanschluss (16), wobei das Ventil (22) einen zwischen einer Grundstellung und wenigstens einer weiteren Stellung bewegbaren Ventilkörper (28) umfasst, wobei in der Grundstellung eine Verbindung zwischen dem Druckmittelanschluss (16) und einem Druckzylinder (12) des Werkzeugs unterbrochen ist und in der weiteren Stellung die Verbindung zwischen dem Druckmittelanschluss (16) und dem Druckzylinder (12) des Werkzeugs hergestellt ist,
wobei der Druckzylinder (12) mit dem Verschieben des Ventilkörpers (28) in die Grundstellung entlüftet wird und ein am Druckmittelanschluss (16) anliegender Druck den Ventilkörper (28) bei losgelassenem Sicherheitsschalthebel (18) in die Grundstellung verschiebt,
**dadurch gekennzeichnet, dass**
der Ventilkörper (28) eine auf einem Druckversorgungs-Anschlussstutzen (30) verschiebbare Manschette ist, deren Innenfläche mit einer Außenfläche des Druckversorgungs-Anschlussstutzens (30) eine Druckkammer (34) einschließt, wobei die beiden axialen Stirnseiten (34a, 34b) der Drucckammer (34) von Innenflächen der Manschette gebildet sind und unterschiedliche Flächeninhalte haben.

2. Pneumatisches Werkzeug nach einem der vorhergehenden Ansprüche,
**dadurch gekennzeichnet, dass** ein Außendurchmesser des Druckversorgungs-Anschlussstutzen (30) an einer zum Druckzylinder (12) hin geöffneten Seite größer ist als ein Außendurchmesser des Druckversorgungs-Anschlussstutzens (30) an einer zum Druckmittelanschluss (16) hin geöffneten Seite.

3. Pneumatisches Werkzeug nach einem der vorhergehenden Ansprüche,
**dadurch gekennzeichnet, dass** der Druckversorgungs-Anschlussstutzen (30) eine erste, zum Druckmittelanschluss (16) hin geöffnete Innenbohrung (30a) und eine zweite, zum Druckzylinder (12) hin geöffnete Innenbohrung (30b) sowie erste und zweite Druckdurchlass-Bohrungen (32a, 32b) umfasst, die jeweils die erste oder zweite Innenbohrung (30a, 30b) mit der Außenfläche des Druckversorgungs-Anschlussstutzens (30) verbinden, wobei in der Grundstellung die ersten Druckdurchlass-Bohrungen in die Druckkammer (34) münden und die zweiten Druckdurchlass-Bohrungen (32b) zum Entlüften freigegeben sind und in der weiteren Stellung die ersten und die zweiten Druckdurchlass-Bohrungen (32a, 32b) in die Druckkammer (34) münden.

4. Pneumatisches Werkzeug nach einem der vorhergehenden Ansprüche,
**gekennzeichnet durch**
eine Feder (36), die eine Rückstellkraft erzeugt, welche den Ventilkörper (28) bei losgelassenem Sicherheitsschalthebel (18) in die Grundstellung verschiebt.

5. Pneumatisches Werkzeug nach einem der vorhergehenden Ansprüche,
**gekennzeichnet durch**
eine elektrische oder elektronische Schalteinheit (38) mit einem elektromechanischen Sicherheitsschalter (50), der mechanisch mit dem Ventilkörper (28) verbunden ist.

## Claims

1. A pneumatic tool with a handle (26), a valve (22), a safety lever (18) arranged on the handle (26) for actuating the valve (22) and a pressure medium connection (16), wherein the valve (22) comprises a valve body (28) movable between a basic position and at least one further position, wherein in the basic position a connection between the pressure medium connection (16) and a pressure cylinder (12) of the tool is interrupted and in the further position the connection between the pressure medium connection (16) and the pressure cylinder (12) of the tool is established, wherein the pressure cylinder (12) is vented with the shifting of the valve body (28) into the basic position and a pressure applied at the pressure medium connection (16) shifts the valve body (28) into the basic position when the safety lever (18) is released,
**characterized in that** the valve body (28) is a sleeve displaceable on a pressure supply connecting socket (30), the inner surface of which encloses a pressure chamber (34) with an outer surface of the pressure supply connecting socket (30), wherein the two axial end faces (34a, 34b) of the pressure chamber (34) are formed by inner surfaces of the sleeve and have different surface areas.

2. A pneumatic tool according to claim 1, **characterized in that** an outer diameter of the pressure supply connecting socket (30) on a side opened towards the pressure cylinder (12) is larger than an outer diameter of the pressure supply connecting socket (30) on a side opened towards the pressure medium connection (16).

3. A pneumatic tool according to one of the preceding claims, **characterized in that** the pressure supply connecting socket (30) comprises a first inner bore (30a) opened towards the pressure medium connection (16) and a second inner bore (30b) opened towards the pressure cylinder (12) as well as first and second pressure passage bores (32a, 32b), which connect the first or second inner bore (30a, 30b) with the outer surface of the pressure supply connecting socket (30), wherein in the basic position the first pressure passage bores open into the pressure chamber (34) and the second pressure passage bores (32b) are released for venting and in the further position the first and the second pressure passage bores (32a, 32b) open into the pressure chamber (34).

4. A pneumatic tool according to one of the preceding claims, **characterized by** a spring (36) that generates a return force which shifts the valve body (28) into the basic position when the safety lever (18) is released.

5. A pneumatic tool according to one of the preceding claims, **characterized by** an electrical or electronic control unit (38) with an electromechanical safety switch (50) that is mechanically connected to the valve body (28).

## Revendications

1. Outil pneumatique comportant une poignée (26), une soupape (22), un levier de sécurité (18) disposé sur la poignée (26) pour actionner la soupape (22) et un raccord de fluide sous pression (16), ladite soupape (22) comprenant un corps de soupape (28) mobile entre une position de base et au moins une autre position, dans lequel en position de base une liaison entre le raccord de fluide sous pression (16) et un vérin de pression (12) de l'outil est interrompue et dans l'autre position la liaison entre le raccord de fluide sous pression (16) et le vérin de pression (12) de l'outil est établie, dans lequel le vérin de pression (12) est purgé lors du déplacement du corps de soupape (28) dans la position de base et une pression appliquée au raccord de fluide sous pression (16) déplace le corps de soupape (28) dans la position de base lorsque le levier de sécurité (18) est relâché,
**caractérisé en ce que** le corps de soupape (28) est une manchette déplaçable sur un raccord de connexion d'alimentation en pression (30), dont la surface intérieure forme avec une surface extérieure du raccord de connexion d'alimentation en pression (30) une chambre de pression (34), les deux faces d'extrémité axiales (34a, 34b) de la chambre de pression (34) étant formées par des surfaces intérieures de la manchette et ayant des surfaces de dimensions différentes.

2. Outil pneumatique selon la revendication 1,
**caractérisé en ce qu'**un diamètre extérieur du raccord de connexion d'alimentation en pression (30) sur un côté ouvert vers le vérin de pression (12) est plus grand qu'un diamètre extérieur du raccord de connexion d'alimentation en pression (30) sur un côté ouvert vers le raccord de fluide sous pression (16).

3. Outil pneumatique selon l'une des revendications précédentes,
**caractérisé en ce que** le raccord de connexion d'alimentation en pression (30) comprend un premier alésage intérieur (30a) ouvert vers le raccord de fluide sous pression (16) et un second alésage intérieur (30b) ouvert vers le vérin de pression (12) ainsi que des premiers et seconds alésages de passage de pression (32a, 32b), qui relient le premier ou le second alésage intérieur (30a, 30b) à la surface extérieure du raccord de connexion d'alimentation en pression (30), dans lequel en position de base les premiers alésages de passage de pression débouchent dans la chambre de pression (34) et les seconds alésages de passage de pression (32b) sont libérés pour la purge, et dans l'autre position les premiers et seconds alésages de passage de pression (32a, 32b) débouchent dans la chambre de pression (34).

4. Outil pneumatique selon l'une des revendications précédentes,
**caractérisé par** un ressort (36) qui génère une force de rappel qui déplace le corps de soupape (28) dans la position de base lorsque le levier de sécurité (18) est relâché.

5. Outil pneumatique selon l'une des revendications précédentes,
**caractérisé par** une unité de commande électrique ou électronique (38) avec un commutateur de sécurité électromécanique (50) qui est mécaniquement relié au corps de soupape (28).
